# EUROPÄISCHE PATENTANMELDUNG

(11) **EP 1 986 256 A1**
(43) Veröffentlichungstag der Anmeldung: **29.10.2008**
(21) Anmeldenummer: 08014492.6
(22) Anmeldetag: 09.02.2002
(51) Int. Cl.: H01M 4/74, H01M 8/02, H01M 4/72

(54) **Verfahren zum Herstellen eines Substrats für eine Elektrode einer Brennstoffzelleneinheit und nach dem Verfahren hergestelltes Substrat**

(30) Priorität: 18.08.2001 DE 10140620
(62) Teilanmeldung aus: 02002930.2
(71) Anmelder: ElringKlinger AG, 72581 Dettingen (DE)
(72) Erfinder: Zerfaß, Hans-Rainer, 65232 Taunusstein (DE); Diez, Armin, 73252 Lenningen (DE)
(74) Vertreter: Hoeger, Stellrecht & Partner Patentanwälte

(57) **Zusammenfassung**

Um ein Verfahren zum Herstellen eines Substrats für eine Elektrode einer Brennstoffzelleneinheit, welches mindestens ein elektrisch leitfähiges Element umfasst, das an mindestens einer Kontaktstelle elektrisch leitend mit sich selbst oder mit einem anderen elektrisch leitfähigen Element des Substrats verbunden ist, wobei das elektrisch leitfähige Element an der Kontaktstelle mit sich selbst bzw. mit dem anderen elektrisch leitfähigen Element des Substrats verlötet wird und wobei aus einer Vielzahl elektrisch leitfähiger Elemente, die als Fasern ausgebildet sind, ein Vlies gebildet wird, welches einen Bestandteil des Substrats bildet, und/oder aus einem elektrisch leitfähigen Element, das als Draht ausgebildet ist, ein Geflecht, ein Gewebe oder Gestrick gebildet wird, welches einen Bestandteil des Substrats bildet, zu schaffen, welches es ermöglicht, die Festigkeit des Substrats in einfacher und sicherer Weise zu erhöhen, ohne das Substrat zu zerstören, wird vorgeschlagen, dass das Substrat in flüssiges Lotmaterial und/oder in eine Suspension eines Lotpulvers in einem bindemittelhaltigen Lösungsmittel eingebracht wird.

## Beschreibung

Die vorliegende Erfindung betrifft ein Verfahren zum Herstellen eines Substrats für eine Elektrode einer Brennstoffzelleneinheit, welches mindestens ein elektrisch leitfähiges Element umfasst, das an mindestens einer Kontaktstelle elektrisch leitend mit sich selbst oder mit einem anderen elektrisch leitfähigen Element des Substrats verbunden ist.

Solche Verfahren sind aus dem Stand der Technik bekannt.

Die auf einer Elektrodenseite des Substrats angeordnete Elektrode bildet einen Bestandteil einer Kathoden-Anoden-Elektrolyt-Einheit, in welcher im Betrieb der Brennstoffzelleneinheit eine elektrochemische Reaktion abläuft, in deren Verlauf an der Anode der KAE-Einheit Elektronen freigesetzt werden und diese der Kathode der KAE-Einheit zur Ionisierung von Sauerstoffatomen über einen äußeren Stromkreis zugeführt werden.

In der Regel werden mehrere Brennstoffzelleneinheiten zu einem Brennstoffzellenblockverbund zusammengefasst, in welchem die Brennstoffzelleneinheiten längs einer Stapelrichtung aufeinanderfolgen.

Zwischen den KAE-Einheiten zweier aufeinanderfolgender Brennstoffzelleneinheiten angeordnete Kontaktplatten dienen dem Ladungsausgleich zwischen der Kathode der einen Brennstoffzelleneinheit und der Anode der benachbarten Brennstoffzelleneinheit, um der Kathode die zur Ionisierung benötigten Elektronen zuzuführen. Von randständigen Kontaktplatten des Brennstoffzellenblockverbunds können elektrische Ladungen abgegriffen werden, um sie einem externen Nutz-Stromkreislauf zuzuführen.

Das Substrat, auf dem die Anode, der Elektrolyt und die Kathode der KAE-Einheit angeordnet sind, muss elektrisch leitfähig sein und wird darum beispielsweise als Metalldrahtgeflecht, Metalldrahtgewebe, Metalldrahtgestrick oder als ein aus elektrisch leitfähigen Fasern zusammengesetztes Vlies ausgebildet.

Um den Durchtritt eines Brenngases zur Anode zu ermöglichen, muss das Substrat einerseits eine ausreichende Gasdurchlässigkeit aufweisen. Andererseits muss das Substrat aber auch eine ausreichende mechanische Festigkeit aufweisen, um als integrierter Träger für das KAE-Element dienen zu können.

Es ist bereits bekannt, die Festigkeit eines als Metalldrahtgestrick ausgebildeten Substrats dadurch zu erhöhen, dass die Drähte, aus denen das Gestrick gebildet ist, an Kontaktstellen, an welchen sich diese Drähte überkreuzen, durch Kondensator-Entladungsschweißen mechanisch und elektrisch leitend miteinander verbunden werden.

Beim Kondensator-Entladungsschweißen besteht jedoch der Nachteil, dass der Schweißprozess nur schwer kontrollierbar ist und die Gefahr besteht, dass das Drahtgestrick an einigen der Kontaktstellen verbrennt. Außerdem ist eine gezielte Steuerung der Anzahl der Kontaktstellen, an denen eine Verschweißung erfolgt, nicht möglich.

Der vorliegenden Erfindung liegt daher die Aufgabe zugrunde, ein Verfahren der eingangs genannten Art zu schaffen, welches es ermöglicht, die Festigkeit des Substrats in einfacher und sicherer Weise zu erhöhen, ohne das Substrat zu zerstören.

Diese Aufgabe wird bei einem Verfahren mit den Merkmalen des Oberbegriffs von Anspruch 1 erfindungsgemäß dadurch gelöst, dass das elektrisch leitfähige Element an der Kontaktstelle mit sich selbst bzw. mit dem anderen elektrisch leitfähigen Element des Substrats verlötet wird.

Der erfindungsgemäßen Lösung liegt somit das Konzept zugrunde, die Verbindung der elektrisch leitfähigen Elemente, aus denen das Substrat gebildet ist, nicht durch einen schwer kontrollierbaren Kondensator-Entladungsschweißvorgang, sondern durch einen Lötvorgang herzustellen.

Die Herstellung der Lötverbindung erfordert lediglich eine kurzzeitige Erhöhung der Temperatur des Substrats auf eine Temperatur oberhalb des Schmelzpunkts des Lotmaterials. Anders als beim Kondensator-Entladungsschweißen erfolgt diese Erwärmung des Substrats im Wesentlichen homogen, so dass keine lokalen Temperaturspitzen auftreten können, welche zu einer bereichsweisen Zerstörung des Substrats führen.

Außerdem besteht die Möglichkeit, über die Menge des dem Substrat zugeführten Lotmaterials die Anzahl der durch Löten gebildeten Verbindungsstellen zu steuern.

Um das Lot in den Bereich der Kontaktstellen des Substrats zu bringen, gibt es verschiedene Möglichkeiten.

So kann beispielsweise vorgesehen sein, dass das Substrat als Ganzes in flüssiges Lotmaterial eingebracht wird.

Alternativ oder ergänzend hierzu kann vorgesehen sein, dass das Substrat in eine Suspension eines Lotpulvers in einem bindemittelhaltigen Lösungsmittel eingebracht wird.

In beiden Fällen ist vorteilhafterweise vorgesehen, dass überschüssiges Lotmaterial durch Abtropfenlassen und/oder durch Ausschleudern aus dem Substrat entfernt wird.

Alternativ oder ergänzend zu einem Eintauchen des Substrats in flüssiges Lotmaterial oder in eine Lotmaterial enthaltende Suspension kann auch vorgesehen sein, dass auf dem Substrat ein klebriger Überzug erzeugt und anschließend ein Lotpulver auf das Substrat aufgebracht wird.

Die Erzeugung des klebrigen Überzugs an dem Substrat kann insbesondere dadurch erfolgen, dass das Substrat in eine Lösung eingebracht wird, welche ein Bindemittel enthält.

Optional kann die Lösung ferner einen Weichmacher enthalten.

In diesem Fall wird das Substrat vorzugsweise nach dem Einbringen in die Lösung und vor dem Aufbringen des Lotpulvers getrocknet.

In den Fällen, in denen das Substrat in eine Lösung eingebracht wird, welche ein Bindemittel enthält, ist es günstig, wenn das Substrat vor dem Verlöten erwärmt wird, um das Bindemittel zu entfernen.

Vorzugsweise wird das Substrat zum Entfernen des Bindemittels auf eine Temperatur im Bereich von ungefähr 200°C bis ungefähr 500°C, insbesondere im Bereich von ungefähr 300°C bis ungefähr 400°C, erwärmt.

In den Fällen, in denen das Substrat in eine bindemittelhaltige Lösung eingebracht wird, wird vorzugsweise ein Acrylat und/oder ein Methacrylat als Bindemittel verwendet.

Alternativ oder ergänzend zu einem Eintauchen des Substrats als Ganzem in ein Lotmaterial kann auch vorgesehen sein, dass das Substrat aus mindestens einem elektrisch leitfähigen Element gebildet wird, welches zuvor mit einem Lotmaterial belegt worden ist.

In diesem Fall wird das Substrat vorteilhafterweise zum Verlöten der Kontaktstellen auf eine Temperatur oberhalb der Schmelztemperatur des Lotmaterials erwärmt, nachdem das Substrat aus dem elektrisch leitfähigen Element oder aus den elektrisch leitfähigen Elementen gebildet worden ist.

Um das elektrisch leitfähige Element mit dem Lotmaterial zu belegen, gibt es verschiedene Möglichkeiten.

So kann beispielsweise vorgesehen sein, dass das elektrisch leitfähige Element vor der Bildung des Substrats in flüssiges Lotmaterial eingebracht wird.

Insbesondere kann vorgesehen sein, dass das elektrisch leitfähige Element als ein Draht ausgebildet ist, welcher mit einer Beschichtung aus Lotmaterial versehen wird, indem der Draht in flüssiges Lotmaterial eingebracht wird, bevor das Substrat aus dem Draht, beispielsweise durch Flechten, Weben oder Stricken, gebildet wird.

Alternativ oder ergänzend hierzu kann vorgesehen sein, dass das elektrisch leitfähige Element, aus dem das Substrat gebildet wird, als ein im Wesentlichen linienförmiges Element ausgebildet ist und vor der Bildung des Substrats mit einem im Wesentlichen linienförmigen Element aus einem Lotmaterial verbunden wird.

Insbesondere kann das elektrisch leitfähige Element als ein Draht ausgebildet sein, welcher mit einem Lotdraht aus dem Lotmaterial verzwirnt wird, bevor das Substrat aus dem Draht, beispielsweise durch Flechten, Weben oder Stricken, gebildet wird.

Bei einer bevorzugten Ausgestaltung des erfindungsgemäßen Verfahrens ist vorgesehen, dass das Substrat aus einem elektrisch leitfähigen Element gebildet wird, das als im Wesentlichen linienförmiges Element ausgebildet ist.

Das elektrisch leitfähige Element kann insbesondere als elektrisch leitfähige Faser oder als elektrisch leitfähiger Draht ausgebildet sein.

Insbesondere kann vorgesehen sein, dass aus einer Vielzahl elektrisch leitfähiger Elemente, die als Fasern ausgebildet sind, ein Vlies gebildet wird, welches einen Bestandteil des Substrats bildet.

Alternativ oder ergänzend hierzu kann auch vorgesehen sein, dass aus einem elektrisch leitfähigen Element, das als Draht ausgebildet ist, ein Geflecht, Gewebe oder Gestrick gebildet wird, welches einen Bestandteil des Substrats bildet.

Um ein Substrat mit einer gewünschten Dicke zu erhalten, kann vorgesehen sein, dass das Substrat ein Geflecht, Gewebe oder Gestrick mit mehreren Lagen umfasst. In diesem Fall ist es zur Erhöhung der Festigkeit dieses Geflechts, Gewebes oder Gestricks besonders günstig, wenn mindestens zwei verschiedene Lagen des Geflechts, des Gewebes oder des Gestricks an Kontaktstellen miteinander verlötet werden.

Ferner kann vorgesehen sein, dass zur Herstellung des Substrats mehrere Geflechte, Gewebe oder Gestricke gebildet werden. Diese Geflechte, Gewebe oder Gestricke können einander gleichen oder aber sich in verschiedener Hinsicht, beispielsweise hinsichtlich der Art oder des Durchmessers des verwendeten Drahtes oder hinsichtlich der geometrischen Eigenschaften des Geflechts, Gewebes oder Gestricks unterscheiden. Handelt es sich um Gestricke, so können beispielsweise die Maschenlänge und die Maschenweite zwischen zwei verschiedenen Gestricken variieren.

In diesem Fall ist es zur Erhöhung der mechanischen Festigkeit des Substrats besonders günstig, wenn mindestens zwei verschiedene Geflechte, Gewebe oder Gestricke an Kontaktstellen miteinander verlötet werden.

Vorzugsweise werden mindestens zwei der Geflechte, Gewebe oder Gestricke aus Drähten mit unterschiedlichen Durchmessern gebildet.

So kann insbesondere vorgesehen sein, eine elektrodenseitige Schicht des Substrats, auf welcher die Elektrode der Brennstoffzelleneinheit angeordnet wird, aus einem engmaschigen Gestrick aus einem vergleichsweise dünnen Draht zu bilden, während eine der Elektrode abgewandte Schicht des Substrats aus einem grobmaschigen Gestrick aus einem vergleichsweise dicken Draht gebildet wird.

Die vorliegende Erfindung betrifft ferner ein Substrat für eine Elektrode einer Brennstoffzelleneinheit, welche mindestens ein elektrisch leitfähiges Element umfasst, das an mindestens einer Kontaktstelle elektrisch leitend mit sich selbst oder mit einem anderen elektrisch leitfähigen Element des Substrats verbunden ist.

Der Erfindung liegt die weitere Aufgabe zugrunde, ein derartiges Substrat zu schaffen, welches eine hohe mechanische Festigkeit aufweist und in einfacher Weise herstellbar ist, ohne bereichsweise zerstört zu werden.

Diese Aufgabe wird bei einem Substrat mit den Merkmalen des Oberbegriffs von Anspruch 21 erfindungsgemäß dadurch gelöst, dass das elektrisch leitfähige Element an der Kontaktstelle mit sich selbst oder mit einem anderen elektrisch leitfähigen Element verlötet ist.

Besondere Ausgestaltungen des erfindungsgemäßen Substrats sind Gegenstand der abhängigen Ansprüche 22 bis 27, deren Vorteile bereits vorstehend im Zusammenhang mit besonderen Ausgestaltungen des erfindungsgemäßen Verfahrens erläutert worden sind.

Anspruch 28 ist auf eine Brennstoffzelleneinheit gerichtet, welche mindestens ein erfindungsgemäßes Substrat und eine an dem Substrat angeordnete Elektrode umfasst.

Anspruch 29 ist auf einen Brennstoffzellenblockverbund gerichtet, welcher eine Mehrzahl erfindungsgemäßer Brennstoffzelleneinheiten umfasst, die längs einer Stapelrichtung aufeinanderfolgen.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Brennstoffzellenvorrichtung mit Zuführleitungen und Abführleitungen für das Oxidationsmittel und das Brennstoffgas;
- Fig. 2: einen schematischen vertikalen Schnitt durch einen in dem Gehäuse der Brennstoffzellenvorrichtung aus Fig. 1 angeordneten Brennstoffzellenblockverbund;
- Fig. 2A: eine Draufsicht von oben auf Endplatten des Brennstoffzellenblockverbunds aus Fig. 2;
- Fig. 3: eine schematische perspektivische Explosionsdarstellung zweier in der Stapelrichtung des Brennstoffzellenblockverbunds aufeinanderfolgender Brennstoffzelleneinheiten;
- Fig. 4: den rechten Teil eines schematischen Querschnitts durch vier in der Stapelrichtung des Brennstoffzellenblockverbunds aufeinanderfolgende Brennstoffzelleneinheiten;
- Fig. 5: eine vergrößerte Darstellung des Bereichs I aus Fig. 4;
- Fig. 6: einen Ausschnitt aus einer schematischen Draufsicht auf eine Lage eines Drahtgestricks;
- Fig. 7: einen schematischen Querschnitt durch die Kathoden-Anoden-Elektrolyt-Einheit einer Brennstoffzelleneinheit; und
- Fig. 8: eine schematische Seitenansicht eines mit einem Lotdraht verzwirnten Metalldrahts.

Gleiche oder funktional äquivalente Elemente sind in allen Figuren mit denselben Bezugszeichen bezeichnet.

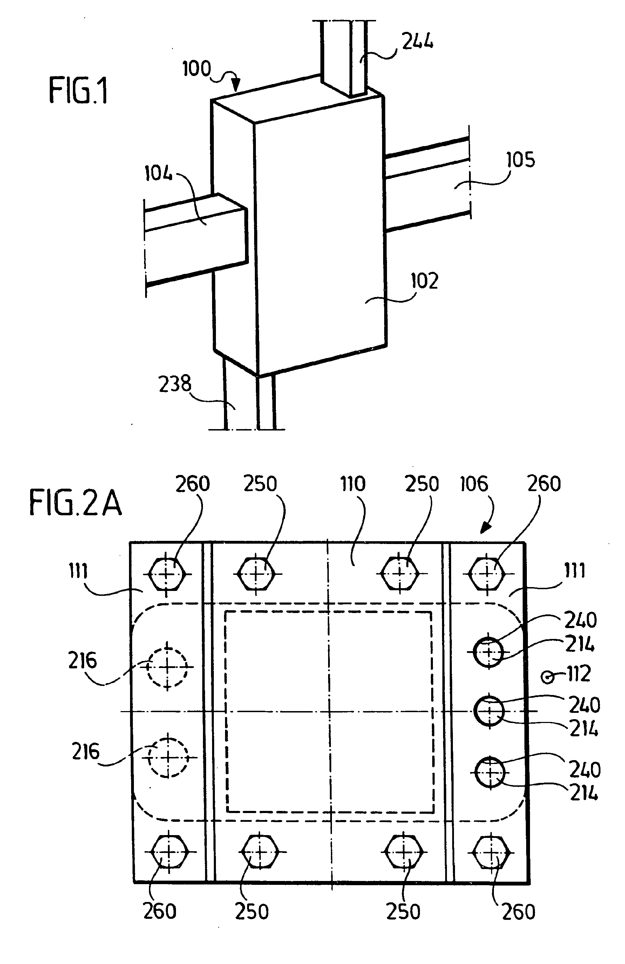

Eine in den Fig. 1 bis 7 dargestellte, als Ganzes mit 100 bezeichnete Brennstoffzellenvorrichtung umfasst ein im Wesentlichen quaderförmiges Gehäuse 102 (siehe Fig. 1), in das eine Oxidationsmittel-Zuführleitung 104 mündet, über die dem Innenraum des Gehäuses 102 ein Oxidationsmittel, beispielsweise Luft oder reiner Sauerstoff, von einem (nicht dargestellten) Zuführgebläse unter einem Überdruck von beispielsweise ungefähr 50 mbar zugeführt wird.

Ferner mündet in das Gehäuse 102 eine Oxidationsmittel-Abführleitung 105, durch welche überschüssiges Oxidationsmittel aus dem Innenraum des Gehäuses 102 abführbar ist.

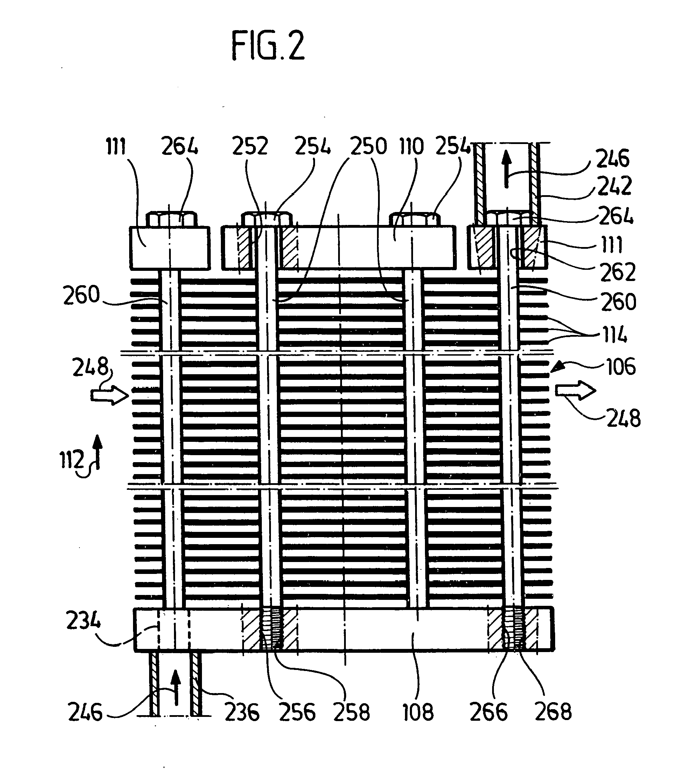

Im Innenraum des Gehäuses 102 ist ein in Fig. 2 als Ganzes dargestellter Brennstoffzellenblockverbund 106 angeordnet, welcher eine untere Endplatte 108, eine mittlere obere Endplatte 110, zwei seitliche obere Endplatten 111 und eine Vielzahl zwischen der unteren Endplatte 108 und den oberen Endplatten 110, 111 angeordneter, längs einer Stapelrichtung 112 aufeinanderfolgender Brennstoffzelleneinheiten 114 umfasst.

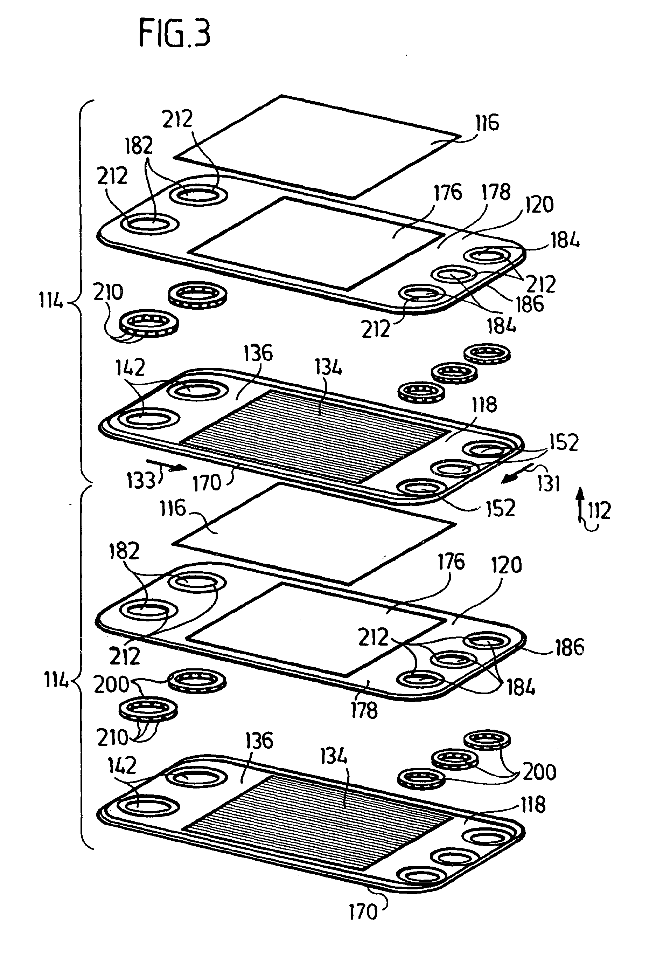

Wie am besten aus Fig. 3 zu ersehen ist, welche eine perspektivische Explosionsdarstellung zweier längs der Stapelrichtung 112 aufeinanderfolgender Brennstoffzelleneinheiten 114 zeigt, umfasst jede der Brennstoffzelleneinheiten 114 eine im Wesentlichen plattenförmige Kathoden-Anoden-Elektrolyt-Einheit 116 (im folgenden kurz als KAE-Einheit bezeichnet), die zwischen einer Kontaktplatte 118 und einem Fluidführungsrahmen 120 gehalten ist.

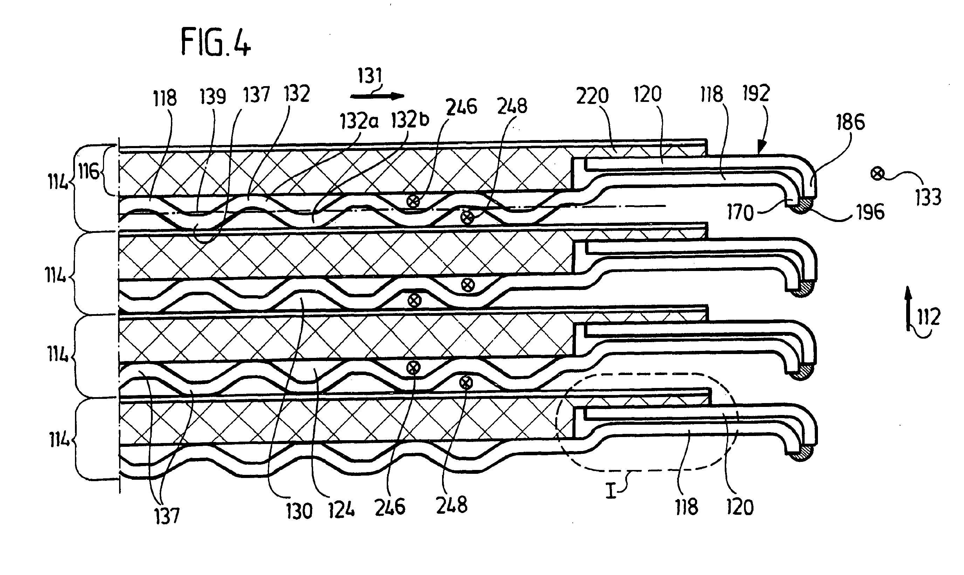

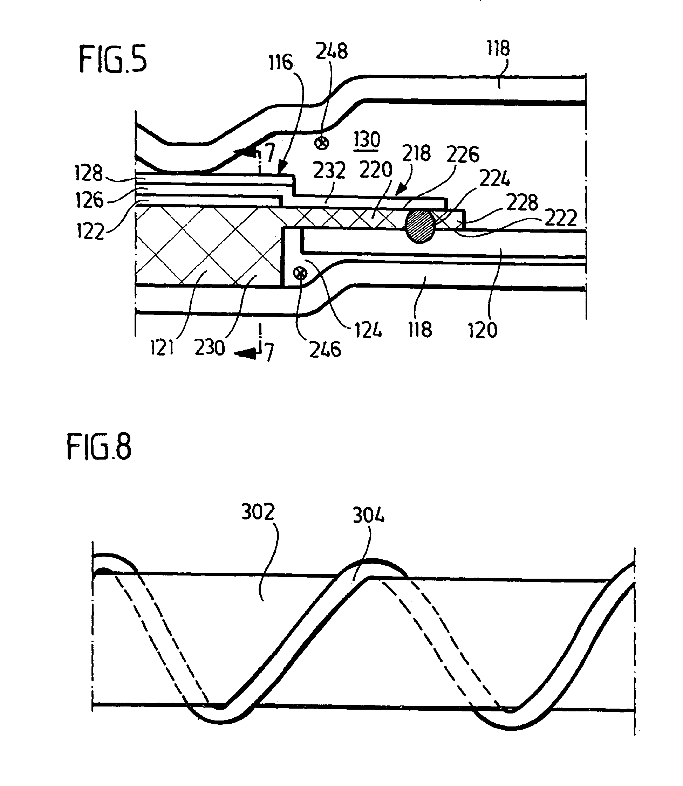

Die KAE-Einheit 116 umfasst, wie in den Fig. 4 und 5 rein schematisch dargestellt ist, ein gasdurchlässiges, elektrisch leitfähiges Substrat 121, dessen Aufbau nachstehend noch im einzelnen erläutert werden wird.

Aufgrund der Gasdurchlässigkeit des Substrats 121 kann ein Brenngas aus einem an das Substrat 121 angrenzenden Brenngasraum 124 durch das Substrat hindurchtreten.

Ferner umfasst die KAE-Einheit 116 eine auf dem Substrat 121 angeordnete plattenförmige Anode 122 aus einem elektrisch leitfähigen keramischen Material, beispielsweise Ni-ZrO₂-Cermet (Keramik-Metall-Gemisch), welches porös ist, um dem Brenngas aus dem Brenngasraum 124 den Durchtritt durch die Anode 122 zu dem an die Anode 122 angrenzenden Elektrolyten 126 zu ermöglichen (siehe Fig. 5).

Als Brenngas kann beispielsweise ein kohlenwasserstoffhaltiges Gasgemisch oder reiner Wasserstoff verwendet werden.

Der Elektrolyt 126 ist vorzugsweise als Feststoffelektrolyt ausgebildet und beispielsweise aus Yttrium-stabilisiertem Zirkoniumdioxid gebildet.

Auf der der Anode 122 gegenüberliegenden Seite des Elektrolyten 126 grenzt an denselben eine plattenförmige Kathode 128 an, die aus einem elektrisch leitfähigen keramischen Material, beispielsweise aus dotiertem LaMnO₃, gebildet ist und eine Porosität aufweist, um einem Oxidationsmittel, beispielsweise Luft oder reinem Sauerstoff, aus einem an die Kathode 128 angrenzenden Oxidationsmittelraum 130 den Durchtritt zu dem Elektrolyten 126 zu ermöglichen.

Der Elektrolyt 126 ist im Wesentlichen gasdicht, so dass kein Oxidationsmittel aus dem Oxidationsmittelraum 130 durch den Elektrolyten 126 in den Brenngasraum 124 und kein Brenngas aus dem Brenngasraum 124 durch den Elektrolyten 126 in den Oxidationsmittelraum 130 gelangen kann.

Im Betrieb der Brennstoffzellenvorrichtung weist die KAE-Einheit 116 jeder Brennstoffzelleneinheit 114 eine Temperatur von beispielsweise ungefähr 850°C auf, bei welcher der Elektrolyt 126 für Sauerstoffionen leitfähig ist. Das Oxidationsmittel aus dem Oxidationsmittelraum 130 nimmt an der Anode 122 Elektronen auf und gibt zweiwertige Sauerstoffionen an den Elektrolyten 126 ab, welche durch den Elektrolyten 126 hindurch zur Anode 122 wandern. An der Anode 122 wird das Brenngas aus dem Brenngasraum 124 durch die Sauerstoffionen aus dem Elektrolyten 126 oxidiert und gibt dabei Elektronen an die Anode 122 ab.

Die Kontaktplatten 118 dienen dazu, die bei der Reaktion an der Anode 122 frei werdenden Elektronen von der Anode 122 über das Substrat 121 abzuführen bzw. die für die Reaktion an der Kathode 128 benötigten Elektronen der Kathode 128 zuzuführen.

Hierzu besteht jede der Kontaktplatten 118 aus einem elektrisch gut leitfähigen Metallblech, das (wie am besten aus Fig. 4 zu ersehen ist) mit einer Vielzahl von Kontaktelementen 132 versehen ist, welche beispielsweise die Form sich in der Längsrichtung 133 der Kontaktplatte 118 erstreckender Rippen aufweisen, die in der Querrichtung 131 der Kontaktplatte 118 aufeinanderfolgen, wobei die in der Querrichtung 131 aufeinanderfolgenden Kontaktelemente 132 unmittelbar aneinander angrenzen und von der Mittelebene 139 der Kontaktplatte 118 aus abwechselnd zu verschiedenen Seiten der Kontaktplatte 118 vorspringen. Die von der Kontaktplatte 118 nach oben und somit zu der Anode 122 der derselben Brennstoffzelleneinheit 114 zugehörigen KAE-Einheit 116 vorspringenden anodenseitigen Kontaktelemente sind mit dem Bezugszeichen 132a, die von der Kontaktplatte 118 nach unten und damit zu der Kathode 128 der einer benachbarten Brennstoffzelleneinheit 114 zugehörigen KAE-Einheit 116 vorspringenden kathodenseitigen Kontaktelemente sind mit dem Bezugszeichen 132b bezeichnet.

Jedes der Kontaktelemente 132 weist einen mittigen, streifenförmigen Kontaktbereich 137 auf, an dem es mit einer angrenzenden KAE-Einheit 116 in elektrisch leitendem Kontakt steht (siehe Fig. 4).

Die Kontaktbereiche 137 der anodenseitigen Kontaktelemente 132a einer Kontaktplatte 118 stehen mit dem Substrat 121 und somit mit der Anode 122 der derselben Brennstoffzelleneinheit 114 zugehörigen KAE-Einheit 116 in elektrischem Flächenkontakt, so dass Elektronen von der jeweiligen Anode 122 in die Kontaktplatte 118 gelangen können.

Die kathodenseitigen Kontaktelemente 132b der Kontaktplatten 118 stehen jeweils mit der Kathode 128 der einer benachbarten Brennstoffzelleneinheit 114 zugehörigen KAE-Einheit 116 in elektrisch leitfähigem Flächenkontakt, so dass Elektronen von der Kontaktplatte 118 zu der Kathode 128 gelangen können. Auf diese Weise ermöglichen die Kontaktplatten 118 den Ladungsausgleich zwischen den Anoden 122 und den Kathoden 128 längs der Stapelrichtung 112 aufeinanderfolgender KAE-Einheiten 116.

Die an den Enden des Brennstoffzellenblockverbunds 106 angeordneten Kontaktplatten 118 sind (auf nicht zeichnerisch dargestellte Weise) mit einem externen Stromkreislauf verbunden, um die an diesen randständigen Kontaktplatten 118 entstehenden elektrischen Ladungen abzugreifen.

Das aus den Kontaktelementen 132 gebildete Kontaktfeld 134 (siehe Fig. 3) jeder Kontaktplatte 118 weist die Struktur eines in der Querrichtung 131 der Kontaktplatte 118 gewellten Wellblechs auf.

Wie am besten aus Fig. 3 zu ersehen ist, ist das mit den Kontaktelementen 132 versehene mittige, im Wesentlichen rechteckige Kontaktfeld 134 jeder Kontaktplatte 118 in einen ebenen, im Wesentlichen rechteckigen Gasführungsbereich 136 der Kontaktplatte 118 eingebettet.

In dem Gasführungsbereich 136 jeder Kontaktplatte 118 sind mehrere, beispielsweise zwei, im Wesentlichen kreisförmige Brenngasdurchgangsöffnungen 142, die dem Durchtritt von den Brennstoffzelleneinheiten 114 zuzuführendem Brenngas durch die Kontaktplatte 118 dienen, und mehrere, beispielsweise drei, im Wesentlichen kreisförmige Abgasdurchgangsöffnungen 152 ausgebildet, die dem Durchtritt von aus den Brennstoffzelleneinheiten 114 abzuführendem Abgas, welches überschüssiges Brenngas und Verbrennungsprodukte, insbesondere Wasser, enthält, durch die Kontaktplatte 118 dienen.

Ferner ist jede Kontaktplatte 118 mit einem längs ihres Randes umlaufenden Verbindungsflansch 170 versehen, welcher sich im Wesentlichen parallel zu der Stapelrichtung 112 nach unten erstreckt (siehe Fig. 4).

Jede der Kontaktplatten 118 ist als Blechformteil ausgebildet, welches aus einer im Wesentlichen ebenen, im Wesentlichen rechteckigen Blechlage durch Prägen und/oder Tiefziehen sowie durch Ausstanzen oder Ausschneiden der Brenngasdurchgangsöffnungen 142 und der Abgasdurchgangsöffnungen 152 gebildet ist.

Auch die Fluidführungsrahmen 120 sind als Blechformteile aus einer im Wesentlichen ebenen, im Wesentlichen rechteckigen Blechlage gebildet.

Wie am besten aus Fig. 3 zu ersehen ist, weist jeder Fluidführungsrahmen 120 eine im Wesentlichen rechteckige, mittige Durchtrittsöffnung 176 für den Durchtritt der KAE-Einheit 116 derselben Brennstoffzelleneinheit 114 auf.

Diese Durchtrittsöffnung 176 ist von einem im Wesentlichen ebenen, senkrecht zur Stapelrichtung 112 ausgerichteten Gasführungsbereich 178 umgeben.

In dem Gasführungsbereich 178 des Fluidführungsrahmens 120 sind mehrere, beispielsweise zwei, im Wesentlichen kreisförmige Brenngasdurchgangsöffnungen 182 ausgebildet, welche den Durchtritt von Brenngas durch den Fluidführungsrahmen 120 ermöglichen.

Ferner sind in dem Gasführungsbereich 178 mehrere, beispielsweise drei, im Wesentlichen kreisförmige Abgasdurchgangsöffnungen 184 ausgebildet, welche den Durchtritt von aus den Brennstoffzelleneinheiten 114 abzuführendem Abgas durch den Fluidführungsrahmen 120 ermöglichen.

Der Gasführungsbereich 178 jedes Fluidführungsrahmens 120 ist an seinem äußeren Rand mit einem Verbindungsflansch 186 versehen, welcher sich von dem Gasführungsbereich 178 aus im Wesentlichen parallel zu der Stapelrichtung 112 nach unten erstreckt (siehe Fig. 4).

Jeweils ein Fluidführungsrahmen 120 und eine Kontaktplatte 118 bilden zusammen ein Gehäuse 192 einer Brennstoffzelleneinheit 114.

Wie aus Fig. 4 zu ersehen ist, umgreift der Verbindungsflansch 186 des Fluidführungsrahmens 120 den Verbindungsflansch 170 der Kontaktplatte 118. Der untere Rand des Verbindungsflansches 170 der Kontaktplatte 118 und der untere Rand des Verbindungsflansches 186 des Fluidführungsrahmens 120 sind mittels einer Schweißnaht 196 gasdicht aneinander festgelegt.

Die Schweißnaht 196 kann beispielsweise im Laserschweißverfahren oder im Elektronenstrahlschweißverfahren hergestellt werden.

Wie aus Fig. 3 zu ersehen ist, sind im Bereich der Abgasdurchgangsöffnungen 152, 184 und im Bereich der Brenngasdurchgangsöffnungen 142, 182 jeweils ringförmige Abstützelemente 200 angeordnet, welche sich mit einer unteren Stirnfläche an einer Kontaktplatte 118 und mit einer oberen Stirnfläche an einem Fluidführungsrahmen 120 abstützen. Diese Abstützelemente 200 dienen dazu, die Kontaktplatte 118 und den Fluidführungsrahmen 120 eines Gehäuses 192 einer Brennstoffzelleneinheit 114 auf Abstand voneinander zu halten und so ein Zusammendrücken des Gehäuses 192 durch die bei der Montage des Brennstoffzellenblockverbunds 106 auf das Gehäuse 192 einwirkende Einspannkraft zu verhindern.

Jedes der Abstützelemente 200 weist radial ausgerichtete, das Abstützelement 200 von dessen Innenseite bis zu dessen Außenseite durchsetzende Gasdurchtrittskanäle 210 auf, um einen Gasdurchtritt von der Innenseite zur Außenseite des Abstützelements 200 (oder in umgekehrter Richtung) zu ermöglichen.

Wie aus Fig. 3 zu ersehen ist, sind zwischen der Unterseite jeder Kontaktplatte 118 und der Oberseite des in der Stapelrichtung 112 unter der betreffenden Kontaktplatte 118 angeordneten Fluidführungsrahmens 120 einer benachbarten Brennstoffzelleneinheit 114 ringförmige Gaskanal-Dichtungen 212 angeordnet, welche jeweils eine Abgasdurchgangsöffnung 152, 184 bzw. eine Brenngasdurchgangsöffnung 142, 182 umschließen.

Jede der Gaskanaldichtungen 212 dichtet den Zwischenraum zwischen der angrenzenden Kontaktplatte 118 und dem angrenzenden Fluidführungsrahmen 120 gasdicht ab und bildet eine elektrische Isolation zwischen der angrenzenden Kontaktplatte 118 und dem angrenzenden Fluidführungsrahmen 120.

Die Gaskanal-Dichtungen 212 können beispielsweise jeweils eine Flachdichtung aus Glimmer, insbesondere aus Phlogopit, umfassen.

Die in der Stapelrichtung 112 aufeinanderfolgenden Kontaktplatten 118 und Fluidführungsrahmen 120 mit den jeweils dazwischen angeordneten Abstützelementen 200 und Gaskanal-Dichtungen 212 begrenzen mehrere, beispielsweise drei, Abgaskanäle 214, in welche Abgas aus den Brenngasräumen 124 der Brennstoffzelleneinheiten 114 eintreten kann und die durch die Gaskanal-Dichtungen 212 gasdicht von den Oxidationsmittelräumen 130 der Brennstoffzelleneinheiten 114 getrennt sind (siehe Fig. 2A).

In entsprechender Weise begrenzen die in der Stapelrichtung 112 aufeinanderfolgenden Kontaktplatten 118 und Fluidführungsrahmen 120 mit den jeweils dazwischen angeordneten Abstützelementen 200 und Gaskanal-Dichtungen 212 mehrere, beispielsweise zwei, Brenngaskanäle 216, welche sich längs der Stapelrichtung 112 erstrecken und aus welchen Brenngas durch die Gasdurchtrittskanäle 210 in den Abstützelementen 200 in die Brenngasräume 124 der Brennstoffzelleneinheiten 114 austreten kann und welche durch die Gaskanal-Dichtungen 212 gasdicht von den Oxidationsmittelräumen 130 der Brennstoffzelleneinheiten 114 getrennt sind.

Ferner ist der Brenngasraum 124 jeder Brennstoffzelleneinheit 114 von dem Oxidationsmittelraum 130 einer in der Stapelrichtung 112 darüber angeordneten Brennstoffzelleneinheit 114 gasdicht durch eine Brenngasraum-Dichtung 218 getrennt, deren Aufbau im folgenden unter Bezugnahme auf die Fig. 5 detailliert beschrieben wird.

Wie aus Fig. 5 zu ersehen ist, weist das Substrat 121 der KAE-Einheit 116 einen verdichteten Außenbereich 220 auf, der sich längs des gesamten Umfangs des Substrats 121 erstreckt und in welchem die Dicke des Substrats 121 durch einen Pressvorgang auf beispielsweise ungefähr 20 % der Anfangsdicke, das heißt der Dicke des ungepressten Bereichs des Substrats 121, reduziert worden ist.

Bei diesem Verdichtungsvorgang wird die Porosität des Substrats 121, das heißt der prozentuale Anteil des gasgefüllten Volumens des Substrats 121 am Gesamtvolumen des Substrats 121, in dem verdichteten Außenbereich 220 auf nahezu Null verringert.

Um dies zu erreichen, wird bei einem Substrat 121, das eine Porosität von X % aufweist, die Dicke im verdichteten Außenbereich 220 durch den Verdichtungsvorgang vorzugsweise auf (100 - X) % der Anfangsdicke reduziert; im Falle einer Porosität von 80 % also auf 20 % der Anfangsdicke.

Das Substrat 121 wird mit der Unterseite 222 des verdichteten Außenbereichs 220 auf den Fluidführungsrahmen 120 aufgelegt und durch einen Schweißvorgang, beispielsweise durch Laserschweißen, Elektronenstrahlschweißen, Buckelschweißen oder Kondensatorentladungsschweißen, gasdicht mit dem metallischen Material des Fluidführungsrahmens 120 verbunden.

Durch den Schweißvorgang wird in dem verdichteten Außenbereich 220 des Substrats 121 eine keine Porosität mehr aufweisende gasdichte Zone 224 gebildet, welche sich von der Unterseite 222 bis zu der Oberseite 226 des verdichteten Außenbereichs 220 durch den verdichteten Außenbereich 220 des Substrats 121 hindurch erstreckt und eine sich längs des gesamten Umfangs des Substrats 121 erstreckende gasdichte Barriere bildet, welche einen Gasdurchtritt von dem außerhalb der gasdichten Zone 224 liegenden Randbereich 228 in den von der gasdichten Zone 224 umschlossenen Innenbereich 230 des Substrats 121 ebenso wie einen Gasdurchtritt in umgekehrter Richtung verhindert.

Statt durch Verschweißen des Substrats 121 mit dem Fluidführungsrahmen 120 kann die gasdichte Zone 224 im verdichteten Außenbereich 220 des Substrats 221 auch durch Verlöten des Substrats 121 mit dem Fluidführungsrahmen 120 gebildet werden. Dabei wird das verwendete Lot aufgrund der Kapillarwirkung in die noch vorhandenen Poren und Durchgangskanäle in dem verdichteten Außenbereich 220 des Substrats 121 hineingesogen und verschließt diese Durchgangsöffnungen dauerhaft, so dass eine sich über die gesamte Höhe des verdichteten Außenbereichs 220 erstreckende gasdichte Zone 224 entsteht.

Wie aus Fig. 5 ferner zu ersehen ist, erstreckt sich der gasdichte Elektrolyt 126 der KAE-Einheit 116 über den Rand der gasdurchlässigen Anode 122 und über den Rand der gasdurchlässigen Kathode 128 hinaus und liegt mit seiner Unterseite direkt auf der Oberseite 226 des verdichteten Außenbereichs 220 des Substrats 221 auf.

Dieser direkt auf dem Substrat 121 angeordnete Außenbereich 232 des Elektrolyts 126 erstreckt sich zum Rand des Substrats 121 hin so weit nach außen, dass er die gasdichte Zone 224 überdeckt und somit der Innenbereich 230 des Substrats 121 gasdicht von dem über dem Elektrolyten 126 liegenden Oxidationsmittelraum 130 getrennt ist, ohne dass für diese gasdichte Abtrennung ein zusätzliches Abdichtmedium benötigt wird.

Der Außenbereich 232 des Elektrolyten 126 bildet somit zusammen mit der gasdichten Zone 224 des verdichteten Außenbereichs 220 des Substrats 121 eine gasdichte Brenngasraum-Dichtung 218, welche den oberhalb des Fluidführungsrahmens 120 angeordneten Oxidationsmittelraum 130 gasdicht von dem unterhalb des Fluidführungsrahmens 120 angeordneten Brenngasraum 124 trennt.

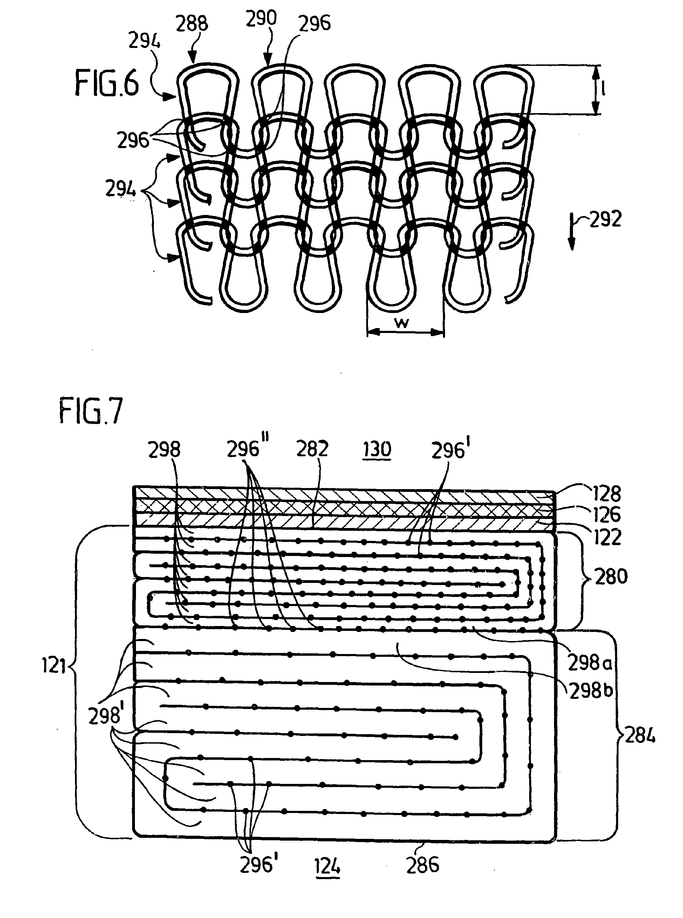

Der Aufbau des gasdurchlässigen Substrats 121 wird im folgenden unter Bezugnahme auf die Fig. 6 und 7 erläutert.

Wie aus Fig. 7 zu ersehen ist, umfasst das Substrat 121 eine obere, elektrodenseitige Schicht 280, auf deren Oberseite 282 die Anode 122 der KAE-Einheit 116 angeordnet ist, und eine untere, brenngasraumseitige Schicht 284, deren Unterseite 286 dem Brenngasraum 124 zugewandt ist.

Beide Schichten 280, 284 des Substrats sind aus jeweils einem Drahtgestrick 288 gebildet, welches schematisch in Fig. 6 dargestellt ist und aus schlingenförmig ineinandergreifenden Maschen 290 besteht.

Der Abstand der Maschen 290 in der Strickrichtung 292 aufeinanderfolgender Maschenreihen 294 des Drahtgestricks 288 entspricht der Maschenlänge I (siehe Fig. 6), während der Abstand einander benachbarter Maschen 290 derselben Maschenreihe 294 der senkrecht zur Strickrichtung 292 genommenen Maschenweite w entspricht.

Wie aus Fig. 6 zu ersehen ist, überkreuzen sich die Maschen 290 aufeinanderfolgender Maschenreihen 294 an Kontaktstellen 296.

Eine Bahn des Drahtgestricks 288 wird entweder auf einer Flachstrickmaschine hergestellt oder durch Aufschneiden und Flachlegen eines auf einer Rundstrickmaschine hergestellten Drahtgestrickschlauches gebildet.

Die mehrlagige Drahtgestrickschicht 280 wird aus einer Bahn des Drahtgestricks 288 gebildet, indem diese Bahn mehrfach gefaltet wird.

Die in Fig. 7 dargestellte achtlagige Schicht 280 wird beispielsweise durch dreimaliges Falten einer Bahn des Drahtgestricks 288 hergestellt.

Die Maschen 290 verschiedener Lagen 298 der Schicht 280 überkreuzen sich dabei an in der Fig. 7 durch die Punkte 296' schematisch dargestellten Kontaktstellen.

Die brenngasraumseitige Schicht 284 des Substrats 121 wird in derselben Weise wie die elektrodenseitige Schicht 280 durch mehrfaches, beispielsweise dreifaches, Falten einer Bahn eines Drahtgestricks 288 gebildet, wobei sich das Drahtgestrick der brenngasraumseitigen Schicht 284 von dem Drahtgestrick der elektrodenseitigen Schicht 280 dadurch unterscheidet, dass es aus einem Draht mit einem größeren Durchmesser gebildet ist und Maschen 290 mit einer größeren Maschenlänge I' und einer größeren Maschenweite w' als das Drahtgestrick 288 der elektrodenseitigen Schicht 280 des Substrats 121 aufweist.

Auch die Maschen 290 in der Strickrichtung 292 aufeinanderfolgender Maschenreihen 294 des Drahtgestricks 288 der brenngasraumseitigen Schicht 284 überkreuzen sich an Kontaktstellen 296.

Ebenso überkreuzen sich die Maschen 290 einander benachbarter Lagen 298' der brenngasraumseitigen Schicht 284 an Kontaktstellen 296'.

Wie aus Fig. 7 zu ersehen ist, wird die elektrodenseitige Schicht 280 mit ihrer untersten Lage 298a voran auf die oberste Lage 298b der brenngasraumseitigen Schicht 284 des Substrats 121 aufgelegt, wobei sich die Maschen 290 des Drahtgestricks der elektrodenseitigen Schicht 280 und des Drahtgestricks der brenngasraumseitigen Schicht 284 an Kontaktstellen 296" überkreuzen.

Um die erforderliche mechanische Festigkeit und eine gute elektrische Leitfähigkeit des Substrats 121 von dessen brenngasraumseitiger Unterseite 286 bis zu der elektrodenseitigen Oberseite 282 des Substrats 121 zu gewährleisten, werden die Maschen 290 der Drahtgestricke 288 der elektrodenseitigen Schicht 280 und der brenngasraumseitigen Schicht 284 des Substrats 121 an den Kontaktstellen 296, 296' und 296" miteinander verlötet.

Als Lot kann insbesondere ein metallisches Lot verwendet werden, welches eine oberhalb der Betriebstemperatur der Brennstoffzellenvorrichtung 100 liegenden Schmelztemperatur aufweist.

Insbesondere kann ein Lot verwendet werden, welches überwiegend Nickel enthält und beispielsweise aus 70 Gewichts-% Nickel, 19 Gewichts-% Chrom und 11 Gewichts-% Silizium zusammengesetzt ist. Ein solches Lot weist eine Schmelztemperatur im Bereich von ungefähr 1000°C bis ungefähr 1100°C auf.

Um das Lot in den Bereich der Kontaktstellen 296, 296' und 296" zu bringen, gibt es verschiedene Möglichkeiten.

Beispielsweise kann vorgesehen sein, dass die Drahtgestricke 288 jeweils aus einem Metalldraht 302 gestrickt werden, welcher mit einem Lotdraht 304 aus dem Lotmaterial verzwirnt ist, so dass der Lotdraht 304 den Metalldraht 302 wendelförmig umgibt (siehe Fig. 8).

Dabei weist der Lotdraht 304 vorzugsweise einen geringeren Durchmesser auf als der Metalldraht 302.

Beispielsweise kann der Durchmesser des Lotdrahts ungefähr 0,01 mm bis ungefähr 0,02 mm betragen, während der Durchmesser des Metalldrahts 302 ungefähr 0,05 mm beträgt.

Vorzugsweise beträgt der Durchmesser des Lotdrahts 304 also ungefähr 20 % bis ungefähr 40 % des Durchmessers des Metalldrahts 302.

Alternativ oder ergänzend zu einer Verzwirnung mit einem Lotfaden kann vorgesehen sein, dass der Metalldraht 302, aus welchem die Drahtgestricke 288 gebildet werden, mit einer Beschichtung aus dem Lotmaterial versehen wird, indem beispielsweise der Metalldraht 302 vor dem Verstricken durch ein Tauchbad geführt wird, welches mit dem aufgeschmolzenen Lot gefüllt ist.

Auch in diesem Fall beträgt die Schichtdicke des Lotmaterials vorzugsweise ungefähr 20 % bis ungefähr 40 % des Durchmessers des Metalldrahts 302.

Das benötigte Lot wird in den vorstehend genannten Fällen somit zusammen mit dem Metalldraht in das jeweilige Drahtgestrick 288 eingebracht.

Der verwendete Metalldraht 302 ist vorzugsweise aus einem hochtemperaturbeständigen Stahl gebildet, beispielsweise aus dem Stahl mit der Werkstoff-Nr. 1.4742 (nach SEW 470), welcher folgende Zusammensetzung aufweist: 0,08 Gewichts-% Kohlenstoff, 1,3 Gewichts-% Silizium, 0,7 Gewichts-% Mangan, 18,0 Gewichts-% Chrom, 1,0 Gewichts-% Aluminium, Rest Eisen. Ein solcher Stahl weist eine gute Temperaturbeständigkeit bis zu 1000°C auf.

Nach dem Herstellen und Zusammenfügen der elektrodenseitigen Schicht 280 und der brenngasraumseitigen Schicht 284 des Substrats 121 wird das Substrat 121 in einem Ofen, vorzugsweise unter Vakuum, kurzzeitig auf eine Temperatur oberhalb der Schmelztemperatur des Lotmaterials, vorzugsweise auf eine Temperatur im Bereich von ungefähr 1000°C bis ungefähr 1100°C, erwärmt, wobei das Lot aufschmilzt, die Oberflächen der an den Kontaktstellen 296, 296' und 296" einander gegenüberliegenden Drähte benetzt und beim Erstarren während einer auf die Erwärmung folgenden Abkühlphase an der jeweiligen Kontaktstelle 296, 296' oder 296" eine elektrisch leitfähige und mechanisch belastbare Lötstelle bildet.

Alternativ oder ergänzend zu der vorstehend beschriebenen Vorgehensweise kann auch vorgesehen sein, dass das aus der elektrodenseitigen Schicht 280 und aus der brenngasraumseitigen Schicht 284 gebildete Substrat 121 als Ganzes in aufgeschmolzenes Lot eingetaucht wird, wobei das Lot insbesondere auch in den Bereich der Kontaktstellen 296, 296' und 296" gelangt.

Überschüssiges Lot kann durch Abtropfenlassen und/oder durch Ausschleudern, wobei das Drahtgestrick in einem rotierenden Korb angeordnet wird, aus dem Substrat 121 entfernt werden.

Auch in diesem Fall bilden sich durch das Abkühlen des Lots nach dem Austauchen aus dem Lotbad an den Kontaktstellen 296, 296' und 296" Lötstellen, welche eine mechanische und elektrisch leitfähige Verbindung zwischen den an den Kontaktstellen 296, 296' bzw. 296" einander überkreuzenden Maschen 290 herstellen.

Das mit den Lötstellen versehene Substrat 121 wird durch mechanische Bearbeitung, beispielsweise durch Zuschneiden, in die gewünschte Form gebracht, in seinem Außenbereich 220 verdichtet und in der vorstehend beschriebenen Weise in die Durchtrittsöffnung 176 eines Fluidführungsrahmens 120 eingesetzt und mit dem Fluidführungsrahmen 120 durch Verschweißen oder Verlöten gasdicht verbunden.

Anschließend wird die Oberseite der elektrodenseitigen Schicht 280 des Substrats 121 in geeigneter Weise, beispielsweise durch ein Plasmaspritzverfahren, mit der Anode 122, dem Elektrolyten 126 und der Kathode 128 der KAE-Einheit 116 beschichtet.

Alternativ oder ergänzend zu der vorstehend beschriebenen Vorgehensweise kann auch vorgesehen sein, dass das Substrat 121 als Ganzes in eine Suspension eines Lotpulvers in einem bindemittelhaltigen Lösungsmittel getaucht und nach dem Austauchen aus der Suspension durch Abtropfenlassen und/oder durch Ausschleudern von überschüssiger Suspension befreit und getrocknet wird.

Als Bindemittel werden vorzugsweise Acrylate und/oder Methacrylate verwendet.

Als Lösungsmittel können beispielsweise Ester, z.B. 3-Methoxybutylacetat, und/oder Ketone, z.B. Methylisobutylketon, und/oder Alkohole, z.B. Terpineol, oder Mischungen der vorstehend genannten Lösungsmittel, verwendet werden.

Das auf diese Weise mit Lotpulver überzogene Substrat 121 wird durch mechanische Bearbeitung, beispielsweise durch Zuschneiden, in die gewünschte Form gebracht, in seinem Außenbereich 220 verdichtet und in der vorstehend beschriebenen Weise in die Durchtrittsöffnung 176 eines Fluidführungsrahmens 120 eingesetzt und mit dem Fluidführungsrahmen 120 durch Verschweißen oder Verlöten gasdicht verbunden.

Anschließend wird der Fluidführungsrahmen 120 mit dem daran festgelegten Substrat 121 auf eine Temperatur im Bereich von beispielsweise ungefähr 300°C bis ungefähr 400°C erhitzt, um das Bindemittel zu entfernen.

Anschließend wird der Fluidführungsrahmen 120 mit dem Substrat 121 kurzzeitig über die Lotschmelztemperatur erhitzt, um das Lotpulver aufzuschmelzen und beim Abkühlen des Lots die Lötstellen an den Kontaktstellen 296, 296' und 296" herzustellen.

Alternativ oder ergänzend zu dieser Vorgehensweise kann auch vorgesehen sein, dass das Substrat 121 als Ganzes in eine Lösung getaucht wird, welche ein Bindemittel und einen Weichmacher enthält, und nach dem Austauchen aus dieser Lösung getrocknet wird. Hierbei bleibt auf dem Substrat 121 ein klebriger Überzug zurück. Das auf diese Weise vorbehandelte Substrat 121 wird anschließend möglichst gleichmäßig mit einem Lotpulver bepudert, wobei das Lotpulver aufgrund des klebrigen Überzuges an dem Substrat 121 festgehalten wird.

Als Lösungsmittel können beispielsweise Ester, z.B. 3-Methoxybutylacetat, und/oder Ketone, z.B. Methylisobutylketon, und/oder Alkohole, z.B. Terpineol, oder Mischungen der vorstehend genannten Lösungsmittel, verwendet werden.

Als Bindemittel kann ein Acrylat und/oder ein Methacrylat verwendet werden.

Als Weichmacher können beispielsweise Phthalsäureester, z.B. Dioctylphthalat oder Dibutylphthalat, verwendet werden.

Das so vorbereitete Substrat wird durch mechanische Bearbeitung, beispielsweise durch Zuschneiden, in die gewünschte Form gebracht, in seinem Außenbereich 220 verdichtet und in der vorstehend beschriebenen Weise in die Durchtrittsöffnung 176 eines Fluidführungsrahmens 120 eingesetzt und mit dem Fluidführungsrahmen 120 durch Verschweißen oder Verlöten gasdicht verbunden.

Anschließend wird der Fluidführungsrahmen 120 mit dem daran festgelegten Substrat 121 auf eine Temperatur im Bereich von ungefähr 300°C bis ungefähr 400°C erhitzt, um das vom Eintauchen in die Lösung her noch vorhandene Bindemittel zu entfernen. Anschließend wird der Fluidführungsrahmen mit dem daran festgelegten Substrat 121 kurzzeitig über die Schmelztemperatur des Lotpulvers erhitzt, worauf sich beim Abkühlen des Lots die Lötstellen an den Kontaktstellen 296, 296' und 296" ausbilden.

Das bei den beiden vorstehend beschriebenen Verfahren verwendete Lotpulver kann insbesondere ein metallisches Lotpulver sein, welches eine oberhalb der Betriebstemperatur der Brennstoffzellenvorrichtung 100 liegende Schmelztemperatur aufweist.

Insbesondere kann ein Lotpulver verwendet werden, welches überwiegend Nickel enthält und beispielsweise aus 70 Gewichts-% Nickel, 19 Gewichts-% Chrom und 11 Gewichts-% Silizium zusammengesetzt ist. Ein solches Lot weist eine Schmelztemperatur im Bereich von ungefähr 1000°C bis ungefähr 1100°C auf.

Wie insbesondere aus Fig. 4 zu ersehen ist, liegt im montierten Zustand einer Brennstoffzelleneinheit 114 die KAE-Einheit 116 der betreffenden Brennstoffzelle 114 mit dem Substrat 121 auf den anodenseitigen Kontaktelementen 132a der Kontaktplatte 118 der Brennstoffzelleneinheit 114 auf.

Ferner liegt die KAE-Einheit 116 mit dem verdichteten Außenbereich 220 des Substrats 121 auf dem Fluidführungsrahmen 120 derselben Brennstoffzelleneinheit 114 auf, wobei sich der unverdichtete Bereich des Substrats 121 durch die Durchtrittsöffnung 176 des Fluidführungsrahmens 120 hindurch erstreckt, das Substrat 121 durch Verschweißung oder Verlötung an dem Fluidführungsrahmen 120 festgelegt ist und der Fluidführungsrahmen 120 durch Verschweißung an der Schweißnaht 196 oder durch Verlötung seines Verbindungsflansches 186 mit dem Verbindungsflansch 170 der Kontaktplatte 118 an der Kontaktplatte 118 festgelegt ist.

Die Brennstoffzelleneinheiten 114 des Brennstoffzellenblockverbunds 106 sind längs der Stapelrichtung 112 so aufeinandergestapelt, dass die kathodenseitigen Kontaktelemente 132b jeder Kontaktplatte 118 sich zu der Kathode der KAE-Einheit 116 der darunter angeordneten Brennstoffzelleneinheit 114 erstrecken und im elektrisch leitenden Kontakt an derselben anliegen.

Dabei fluchten die Brenngasdurchgangsöffnungen 142, 182 und die Abgasdurchgangsöffnungen 152, 184 längs der Stapelrichtung 112 aufeinanderfolgender Brennstoffzelleneinheiten 114 miteinander, um so die Brenngaskanäle 216 bzw. die Abgaskanäle 214 zu bilden.

Wie aus Fig. 2 zu ersehen ist, mündet an dem unteren Ende jedes Brenngaskanals 216 in denselben eine Brenngaszuführöffnung 234, welche die untere Endplatte 108 des Brennstoffzellenblockverbunds 106 koaxial zu dem jeweiligen Brenngaskanal 216 durchsetzt.

An das dem jeweiligen Brenngaskanal 216 abgewandte Ende der Brenngaszuführöffnung 234 ist eine Brenngas-Zweigleitung 236 angeschlossen, welche von einer Brenngas-Zuführleitung 238 (siehe Fig. 1) abzweigt, die durch das Gehäuse der Brennstoffzellenvorrichtung 100 gasdicht hindurchgeführt und an eine (nicht dargestellte) Brenngaszufuhr angeschlossen ist, welche der Brenngas-Zuführleitung 238 ein Brenngas, beispielsweise ein kohlenwasserstoffhaltiges Gas oder reinen Wasserstoff, unter einem Überdruck von beispielsweise ungefähr 50 mbar zuführt.

Die Abgaskanäle 214 des Brennstoffzellenblockverbunds 106 münden an ihren oberen Enden jeweils in eine zum betreffenden Abgaskanal 214 koaxiale Abgasabführöffnung, welche die seitliche obere Endplatte 111 durchsetzt und an ihrem dem jeweiligen Abgaskanal 214 abgewandten Ende an jeweils eine Abgas-Zweigleitung 242 angeschlossen ist (siehe Fig. 2).

Diese Abgas-Zweigleitungen 242 münden in eine gemeinsame Abgas-Abführleitung 244 (siehe Fig. 1), welche gasdicht durch das Gehäuse 102 der Brennstoffzellenvorrichtung 100 hindurchgeführt und an eine (nicht dargestellte) Abgasbehandlungseinheit angeschlossen ist.

Im Betrieb der Brennstoffzellenvorrichtung 100 strömt das Brenngas durch die Brenngas-Zuführleitung 238, die Brenngas-Zweigleitungen 236 und die Brenngas-Zuführöffnungen 234 in die beiden Brenngaskanäle ein und verteilt sich von dort durch die Gasdurchtrittskanäle 210 der brenngaskanalseitigen Abstützelemente 200 auf die Brenngasräume 124 der Brennstoffzelleneinheiten 114, welche jeweils durch die Kontaktplatte 118, den Fluidführungsrahmen 120 und die KAE-Einheit 116 der betreffenden Brennstoffzelleneinheit 114 umschlossen sind.

Wie bereits beschrieben, wird das Brenngas zumindest teilweise an der den jeweiligen Brenngasraum 124 begrenzenden Anode 122 der jeweiligen KAE-Einheit 116 oxidiert.

Das Oxidationsprodukt (Wasser) gelangt zusammen mit überschüssigem Brenngas aus den Brenngasräumen 124 der Brennstoffzelleneinheiten 114 durch die Gasdurchtrittskanäle 210 der abgaskanalseitigen Abstützelemente 200 in die drei Abgaskanäle, aus welchen es durch die Abgasabführöffnungen, die AbgasZweigleitungen 242 und die Abgas-Abführleitung 244 zu der (nicht dargestellten) Abgasbehandlungseinheit abgeführt wird.

In der Abgasbehandlungseinheit wird beispielsweise das Reaktionsprodukt (Wasser) aus dem Abgasstrom entfernt, und überschüssiges Brenngas wird zu der Brenngaszufuhr geleitet, um nochmals der Brennstoffzellenvorrichtung 100 zugeführt zu werden.

Das für den Betrieb der Brennstoffzellenvorrichtung 100 benötigte Oxidationsmittel (beispielsweise Luft oder reiner Sauerstoff) wird dem Innenraum des Gehäuses 102 durch die Oxidationsmittel-Zuführleitung 104 zugeführt.

Im Innenraum des Gehäuses 102 verteilt sich das Oxidationsmittel auf die zwischen den Brenngasräumen 124 der Brennstoffzelleneinheiten 114 ausgebildeten Oxidationsmittelräume 130, welche durch jeweils eine Kontaktplatte 118 einer Brennstoffzelleneinheit 114 sowie durch den Fluidführungsrahmen 120 und die Kathode 128 der KAE-Einheit 116 einer benachbarten Brennstoffzelleneinheit 114 umschlossen sind.

In die Oxidationsmittelräume hinein und aus denselben wieder heraus gelangt das Oxidationsmittel durch die Zwischenräume zwischen jeweils einem Fluidführungsrahmen 120 einer Brennstoffzelleneinheit 114 und der Kontaktplatte 118 der in der Stapelrichtung 112 darauffolgenden Brennstoffzelleneinheit 114, soweit diese Zwischenräume nicht durch die Abstützelemente 200, welche die Brenngaskanäle 216 bzw. die Abgaskanäle 214 umgeben, überdeckt sind.

Wie bereits beschrieben, werden aus dem Oxidationsmittel an den Kathoden 128 der KAE-Einheiten 116 der Brennstoffzelleneinheiten 114 Sauerstoffionen gebildet, welche durch die Elektrolyten 126 zu den Anoden 122 der KAE-Einheiten 116 der Brennstoffzelleneinheiten 114 wandern.

Überschüssiges Oxidationsmittel gelangt aus den Oxidationsmittelräumen 130 der Brennstoffzelleneinheiten 114 auf der der Eintrittsseite des Oxidationsmittels gegenüberliegenden Seite hinaus und wird durch die Oxidationsmittel-Abführleitung 105 aus dem Innenraum des Gehäuses 102 der Brennstoffzellenvorrichtung 100 abgeführt.

Die Strömungsrichtung des Brenngases und des Abgases durch die Brennstoffzellenvorrichtung 100 ist in den Zeichnungen mit einfachen Pfeilen 246, die Strömungsrichtung des Oxidationsmittels durch die Brennstoffzellenvorrichtung 100 mittels Doppelpfeilen 248 angegeben.

Die Strömungsrichtung des Oxidationsmittels durch die Oxidationsmittelräume 130 ist im Wesentlichen parallel zu der Strömungsrichtung des Brenngases durch die Brenngasräume 124.

Um die längs der Stapelrichtung 112 aufeinanderfolgenden Brennstoffzelleneinheiten 114 durch äußere Verspannung aneinander festzulegen, sind mehrere Verbindungsschrauben 250 (siehe Fig. 2) vorgesehen, welche Durchgangsbohrungen 252 in der mittleren oberen Endplatte 110 des Brennstoffzellenblockverbunds 106 durchsetzen und an ihrem dem jeweiligen Schraubenkopf 254 abgewandten Ende mit einem Aussengewinde 256 versehen sind, welches in jeweils eine Gewindebohrung 258 in der unteren Endplatte 108 des Brennstoffzellenverbunds 106 eingedreht ist, so dass die mittlere obere Endplatte 110 und die untere Endplatte 108 durch die Verbindungsschrauben 250 gegeneinander verspannt werden und eine gewünschte Presskraft über die Endplatten 108, 110 auf den mittigen, die Kontaktfelder 134 umfassenden Bereich des Stapels der Brennstoffzelleneinheiten 114 übertragbar ist (siehe Fig. 2).

Ferner sind mehrere Verbindungsschrauben 260 vorgesehen, welche Durchgangsbohrungen 262 in den seitlichen oberen Endplatten 111 des Brennstoffzellenblockverbunds 106 durchsetzen und an ihrem dem jeweiligen Schraubenkopf 264 abgewandten Ende mit einem Außengewinde 266 versehen sind, welches in jeweils eine Gewindebohrung 268 in der unteren Endplatte 108 ein gedreht ist, so dass die seitlichen oberen Endplatten 111 und die untere Endplatte 108 durch die Verbindungsschrauben 260 gegeneinander verspannt sind und eine gewünschte Presskraft über die Endplatten 108, 111 im Bereich der Brenngaskanäle 216 bzw. der Abgaskanäle 214 auf den Stapel der Brennstoffzelleneinheiten 114 übertragbar ist.

Die durch die äußere Verspannung mittels der Verbindungsschrauben 250 und der mittleren oberen Endplatte 110 erzeugte Presskraft bestimmt den Anpressdruck, mit dem die Kontaktelemente 132 gegen das Substrat 121 bzw. gegen die Kathode 128 der angrenzenden KAE-Einheit 116 gepresst werden.

Der Anpressdruck, mit dem die Abstützelemente 200 und die Gaskanal-Dichtungen 212 gegen die Kontaktplatten 118 und die Fluidführungsrahmen 120 gepresst werden, wird dagegen - unabhängig von der Verspannung mittels der Verbindungsschrauben 250 und der mittleren oberen Endplatte 110 - ausschließlich durch die äußere Vorspannkraft bestimmt, mit welcher die seitlichen oberen Endplatten 111 mittels der Verbindungsschrauben 260 gegen die untere Endplatte 108 verspannt sind.

Der vorstehend beschriebene Brennstoffzellenblockverbund 106 wird wie folgt montiert:

Zunächst werden die einzelnen Brennstoffzelleneinheiten 114 montiert, indem jeweils ein Substrat 121 mit seinem verdichteten Außenbereich 220 auf einen Fluidführungsrahmen 120 aufgelegt und in der vorstehend beschriebenen Weise durch Verschweißen oder Verlöten, unter Bildung einer gasdichten Zone 224 in dem verdichteten Außenbereich 220, an dem Fluidführungsrahmen 120 festgelegt wird. Anschließend werden auf dem Substrat 121 die Anode 122, der Elektrolyt 126 und die Kathode 128 der KAE-Einheit 116, beispielsweise durch Plasmaspritzen, erzeugt, wobei der Elektrolyt 126 in der Weise erzeugt wird, dass er die gasdichte Zone 224 in dem verdichteten Aussenbereich 220 des Substrats 121 gasdicht überdeckt, um die Brenngasraum-Dichtung 218 herzustellen.

Anschließend wird die Kontaktplatte 118 der Brennstoffzelleneinheit 114 zur Anlage an der der KAE-Einheit 116 abgewandten Seite des Substrats 121 gebracht, und durch Verschweißen oder Verlöten wird der Verbindungsflansch 170 der Kontaktplatte 118 mit dem Verbindungsflansch 186 des Fluidführungsrahmens 120 gasdicht verbunden.

Darauf wird der Brennstoffzellenverbund 106 aus den einzelnen Brennstoffzelleneinheiten 114 zusammengesetzt, indem die gewünschte Anzahl von Brennstoffzelleneinheiten 114 längs der Stapelrichtung 112 gestapelt wird und die Brennstoffzelleneinheiten 114 mittels der Endplatten 108, 110, 111 und der die Endplatten gegeneinander verspannenden Verbindungsschrauben 250, 260 in ihrer Lage relativ zueinander fixiert werden.

## Patentansprüche

1. Verfahren zum Herstellen eines Substrats (121) für eine Elektrode (122) einer Brennstoffzelleneinheit (114), welches mindestens ein elektrisch leitfähiges Element (302) umfasst, das an mindestens einer Kontaktstelle (296, 296', 296") elektrisch leitend mit sich selbst oder mit einem anderen elektrisch leitfähigen Element des Substrats (121) verbunden ist,
wobei das elektrisch leitfähige Element (302) an der Kontaktstelle (296, 296', 296") mit sich selbst bzw. mit dem anderen elektrisch leitfähigen Element des Substrats (121) verlötet wird und
wobei aus einer Vielzahl elektrisch leitfähiger Elemente, die als Fasern ausgebildet sind, ein Vlies gebildet wird, welches einen Bestandteil des Substrats (121) bildet, und/oder aus einem elektrisch leitfähigen Element (302), das als Draht ausgebildet ist, ein Geflecht, ein Gewebe oder Gestrick (288) gebildet wird, welches einen Bestandteil des Substrats (121) bildet,
**dadurch gekennzeichnet,**
**dass** das Substrat (121) in flüssiges Lotmaterial und/oder in eine Suspension eines Lotpulvers in einem bindemittelhaltigen Lösungsmittel eingebracht wird.

2. Verfahren nach Anspruch 1, **dadurch gekennzeichnet, dass** überschüssiges Lotmaterial durch Abtropfenlassen und/oder durch Ausschleudern aus dem Substrat (121) entfernt wird.

3. Verfahren nach einem der Ansprüche 1 oder 2, **dadurch gekennzeichnet, dass** auf dem Substrat (121) ein klebriger Überzug erzeugt und anschließend ein Lotpulver auf das Substrat (121) aufgebracht wird.

4. Verfahren nach Anspruch 3, **dadurch gekennzeichnet, dass** das Substrat (121) in eine Lösung eingebracht wird, welche ein Bindemittel enthält.

5. Verfahren nach Anspruch 4, **dadurch gekennzeichnet, dass** die Lösung einen Weichmacher enthält.

6. Verfahren nach einem der Ansprüche 4 oder 5, **dadurch gekennzeichnet, dass** das Substrat (121) nach dem Einbringen in die Lösung und vor dem Aufbringen des Lotpulvers getrocknet wird.

7. Verfahren nach einem der Ansprüche 1 bis 6, **dadurch gekennzeichnet, dass** das Substrat (121) in eine Lösung eingebracht wird, welche ein Bindemittel enthält, und dass das Substrat vor dem Verlöten, vorzugsweise auf eine Temperatur im Bereich von 200°C bis 500°C, insbesondere im Bereich von 300°C bis 400°C, erwärmt wird, um das Bindemittel zu entfernen.

8. Verfahren nach einem der Ansprüche 1 bis 7, **dadurch gekennzeichnet, dass** das Substrat (121) in eine Lösung eingebracht wird, welche ein Acrylat und/oder ein Methacrylat als Bindemittel enthält.

9. Verfahren nach einem der Ansprüche 1 bis 8, **dadurch gekennzeichnet, dass** ein Geflecht, ein Gewebe oder Gestrick mit mehreren Lagen (298, 298') gebildet wird, wobei mindestens zwei verschiedene Lagen (298, 298') des Geflechts, des Gewebes oder des Gestricks (288) an Kontaktstellen (296') miteinander verlötet werden.

10. Verfahren nach einem der Ansprüche 1 bis 9, **dadurch gekennzeichnet, dass** mehrere Geflechte, Gewebe oder Gestricke (288) gebildet werden, wobei mindestens zwei verschiedene Geflechte, Gewebe oder Gestricke (288) an Kontaktstellen (296") miteinander verlötet werden.

11. Verfahren nach Anspruch 10, **dadurch gekennzeichnet, dass** mindestens zwei der Geflechte, Gewebe oder Gestricke (288) aus Drähten (302) mit unterschiedlichen Durchmessern gebildet werden.

12. Substrat für eine Elektrode (122) einer Brennstoffzelleneinheit (114), umfassend mindestens ein elektrisch leitfähiges Element (302), das an mindestens einer Kontaktstelle (296, 296', 296") elektrisch leitend mit sich selbst oder mit einem anderen elektrisch leitfähigen Element des Substrats (121) verbunden ist,
wobei das elektrisch leitfähige Element (302) an der Kontaktstelle (296, 296', 296") mit sich selbst oder mit dem anderen elektrisch leitfähigen Element verlötet ist und
wobei das Substrat (121) eine Vielzahl elektrisch leitfähiger Elemente umfasst, die als Fasern ausgebildet sind und das Substrat (121) ein aus diesen Fasern gebildetes Vlies umfasst, und/oder das elektrisch leitfähige Element (302) als Draht ausgebildet ist und das Substrat (121) ein aus dem Draht gebildetes Geflecht, Gewebe oder Gestrick (288) umfasst,
**dadurch gekennzeichnet,**
**dass** das Substrat (121) durch Einbringen in flüssiges Lotmaterial und/oder in eine Suspension eines Lotpulvers in einem bindemittelhaltigen Lösungsmittel mit Lotmaterial versehen ist.

13. Substrat nach Anspruch 12, **dadurch gekennzeichnet, dass** das Geflecht, Gewebe oder Gestrick (288) mehrere Lagen (298, 298') umfasst, wobei mindestens zwei verschiedene Lagen (298, 298') an Kontaktstellen (296') miteinander verlötet sind.

14. Substrat nach einem der Ansprüche 12 oder 13, **dadurch gekennzeichnet, dass** das Substrat (121) mehrere Geflechte, Gewebe oder Gestricke (288) umfasst, wobei mindestens zwei verschiedene Geflechte, Gewebe oder Gestricke (288) an Kontaktstellen (296") miteinander verlötet sind.

15. Substrat nach Anspruch 14, **dadurch gekennzeichnet, dass** mindestens zwei Geflechte, Gewebe oder Gestricke (288) aus Drähten (302) mit unterschiedlichen Durchmessern gebildet sind.

16. Brennstoffzelleneinheit (114), umfassend mindestens ein Substrat (121) nach einem der Ansprüche 12 bis 15 und eine an dem Substrat (121) angeordnete Elektrode (122).

17. Brennstoffzellenblockverbund, umfassend eine Mehrzahl von Brennstoffzelleneinheiten nach Anspruch 16, die längs einer Stapelrichtung (112) aufeinanderfolgen.
